# EUROPÄISCHE PATENTSCHRIFT

(11) **EP 1 814 079 B1**
(45) Veröffentlichungstag und Bekanntmachung des Hinweises auf die Patenterteilung: **08.06.2011**
(21) Anmeldenummer: 06025674.0
(22) Anmeldetag: 12.12.2006
(51) Int. Cl.: G06T 5/40

(54) **Verfahren und Vorrichtung zur Korrektur der Helligkeit eines durch eine Sensormatrix erzeugten Rohbilds**
Method and device for correcting the brightness of a raw image produced using a sensor matrix
Procédé et dispositif destinés à la correction de la luminosité d'une image brute produite par une matrice sensorielle

(30) Priorität: 25.01.2006 DE 102006003596
(43) Veröffentlichungstag der Anmeldung: 01.08.2007
(73) Patentinhaber: SICK AG, 79183 Waldkirch (DE)
(72) Erfinder: Reichenbach, Jürgen, 79312 Emmendingen (DE); Hafner, Carl Joseph, 79276 Reute (DE); Zwölfer, Ulrich, 79341 Kenzingen (DE)
(74) Vertreter: Manitz, Finsterwald & Partner GbR

(56) Entgegenhaltungen:
- EP-A- 1 227 669
- WO-A-2005/066893
- US-A- 6 144 776
- US-A1- 2004 156 563
- US-A1- 2005 041 850

## Beschreibung

Die Erfindung betrifft ein Verfahren und eine Vorrichtung zur Korrektur der Helligkeit eines durch eine Sensormatrix erzeugten Rohbilds.

Bei derartigen Rohbildern wird häufig beobachtet, dass die Bildhelligkeit in den Randbereichen des Rohbildes geringer ist als im Zentrum, obwohl eine homogene Bildhelligkeit zu erwarten wäre. Vor allem wenn die Rohbilder unter schrägem Lichteinfall und/oder schrägem Aufnahmewinkel aufgenommen wurden, wird eine ungleichmäßige Helligkeitsverteilung beobachtet.

Für die genannten Inhomogenitäten können neben einem schrägem Lichteinfall und/oder einem schrägem Aufnahmewinkel auch weitere Faktoren verantwortlich sein. So können z.B. Farbfilter, die einer Sensormatrix vorgelagert sind, winkelabhängige Charakteristika aufweisen. Weiterhin werden Helligkeitabfälle in den Randbereichen eines Rohbildes - oder ganz allgemein Helligkeitinhomogenitäten - aber auch durch Abbildungsfehler einer Empfangsoptik des Sensors verursacht. Schließlich kann auch eine inhomogene Beleuchtung einer zu beobachtenden Fläche Ursache für Artefakte sein.

Derartige Artefakte, die durch den Sensor selbst, durch Beleuchtungseinrichtungen oder durch Verzerrungen im Strahlengang des empfangenen Lichts verursacht werden, stellen einen nicht unerheblichen Störfaktor dar. Insbesondere bei einem optischen Erfassen von Codes (z. B. zur Identifizierung von Gegenständen) durch opto-elektronische Sensoren oder Kameras sind solche parasitären Helligkeitsinhomogenitäten störend, da sie die fehlerfreie Codeerkennung erschweren. Zur Vermeidung dieses Problems ist es bekannt, die genannten Artefakte durch eine geeignete Helligkeitskorrektur (Flat-Field-Korrektur) wieder weitgehend zu entfernen.

Grundsätzlich sind Flat-Field-Korrekturen zur Kompensation abweichender Bildhelligkeiten im Randbereich eines Bildes bekannt. Die US 2005/0041850 A1 beschreibt beispielsweise ein Qualitätsprüfungssystem für Wafer mit einer Kamera, wobei an dem durch die Kamera aufgenommenen Bild - neben anderen Korrekturen - eine Flat-Field-Korrektur durchgeführt wird. Bei der beschriebenen Korrektur soll der Effekt eines winkligen Einfalls eines Beleuchtungslichts berücksichtigt werden. Dabei wird eine zweidimensionale Matrix von Korrekturwerten k(x,y) auf die Helligkeitswerte (Intensitätswerte) der Bildpunkte des aufgenommenen Rohbildes angewandt. Daher werden für dieses Verfahren ebenso viele Korrekturwerte wie Bildpunkte benötigt. Bei einem Sensor, der in einer Richtung (z.B. x-Richtung) 1280 Bildpunkte und in einer dazu senkrechten Richtung (z.B. y-Richtung) 1024 Bildpunkte umfasst, ergeben sich daher beispielsweise etwas mehr als 1,3 Millionen Korrekturwerte. Die Durchführung einer solchen Korrektur benötigt somit erheblichen Speicherplatz. Die Ausführung der Vielzahl von nötigen Rechenoperationen und die damit verbundenen Zugriffe auf den Speicher sind darüber hinaus sehr zeitintensiv.

Die EP 1 227 669 A und die US 2004/0156563 A1 offenbaren jeweils ein Verfahren und eine Vorrichtung mit den Merkmalen des Oberbegriffs des Anspruchs 1 bzw. des Oberbegriffs des Anspruchs 11.

Für viele Anwendungen ist allerdings gerade der Zeitfaktor von besonderer Bedeutung. Außerdem ist es wünschenswert, dass ein helligkeitskorrigierendes Verfahren mit möglichst einfachen und daher kostengünstigen elektronischen Bauteilen ausgeführt werden kann.

Der Erfindung liegt daher die Aufgabe zugrunde, ein schnelles Verfahren zur Korrektur der Helligkeit eines durch eine Sensormatrix erzeugten Rohbildes zu schaffen, das eine einfache und effiziente Helligkeitskorrektur ermöglicht. Außerdem soll das Verfahren möglichst wenige Speicher- und Rechenressourcen beanspruchen und eine zuverlässige Abschätzung der Qualität der Korrektur liefern.

Diese Aufgabe wird durch ein Verfahren mit den Merkmalen des Anspruchs 1 gelöst.

Das erfindungsgemäße Verfahren dient also zur Korrektur der Helligkeit von Bildern, die aufgrund verschiedener Effekte, beispielsweise aufgrund von Artefakten durch die Empfangsoptik, die Sensormatrix, und/oder winklige Aufnahme- und/oder Beleuchtungsgeometrien, eine inhomogene Helligkeitsverteilung, insbesondere in den Randbereichen, aufweisen. Die Bildpunkte eines durch eine Sensormatrix erzeugten Rohbildes sind durch eine Zeilenkoordinate (z.B. in x-Richtung) und eine Spaltenkoordinate (y-Richtung) und zumindest einen Intensitätswert i(x,y) definiert. An zumindest einem Teil dieser Bildpunkte, vorzugsweise an allen Bildpunkten, wird erfindungsgemäß eine Intensitätsanpassung durchgeführt, wobei auf die Intensitätswerte der zu korrigierenden Bildpunkte zwei Intensitätskorrekturen angewandt werden. Diese beiden Intensitätskorrekturen, die gleichzeitig oder nacheinander durchgeführt werden können, sind voneinander unabhängig. Die Intensitätswerte der Bildpunke werden nämlich zum einen in Abhängigkeit von ihrer jeweiligen Zeilenkoordinate - und unabhängig von ihrer jeweiligen Spaltenkoordinate - und zum anderen in Abhängigkeit von ihrer jeweiligen Spaltenkoordinate - und unabhängig von ihrer jeweiligen Zeilenkoordinate - korrigiert. Für ein derartiges Korrekturverfahren werden wesentlich weniger Korrekturkoeffizienten benötigt als bei den herkömmlichen Verfahren, die eine komplette Korrekturmatrix verwenden, bei der jeder einzelne Korrekturwert sowohl von einer Zeilen- als auch von einer Spaltenkoordinate abhängig ist. Bei dem oben genannten Beispiel einer Sensormatrix mit 1280 x 1024 Bildpunkten (Pixeln) werden bei dem erfindungsgemäßen Verfahren lediglich ungefähr 2300 Korrekturwerte benötigt. Bei Sensoren mit mehr Pixeln fällt der Unterschied an erforderlichen Korrekturwerten zwischen den herkömmlichen Matrix-Korrekturverfahren und dem erfindungsgemäßen Korrekturverfahren noch wesentlich deutlicher aus.

Durch die Aufspaltung der Korrekturmatrix k(x,y) in getrennte Korrekturfunktionen f (mit den zeilenabhängigen Korrekturwerten f(x)) und g (mit den spaltenabhängigen Korrekturwerten g(y)) ist bei dem erfindungsgemäßen Verfahren nur die Speicherung zweier eindimensionaler Korrekturwertarrays sowie die Adressierung der Bildpunkte mit jeweils einem Zeilen- oder einem Spaltenindex nötig. Die Korrekturwerte können dabei aufgrund ihrer vergleichsweise geringen Anzahl beispielsweise in einer Lookup-Tabelle im Arbeitsspeicher eines Prozessors gespeichert werden, was die Anzahl der nötigen Zugriffe auf externe Speicher gegenüber bekannten Korrekturverfahren erheblich verringert. Das erfindungsgemäße Verfahren stellt also eine wesentliche Vereinfachung im Gegensatz zu den herkömmlichen Verfahren dar und lässt sich deshalb auch mit vergleichsweise geringem Hardware-Aufwand in Echtzeit, d.h. im Signalfluss und im Pixeltakt, realisieren. Ein Bildspeicher ist daher erst nach Durchführung der erfindungsgemäßen Flat-Field-Korrektur erforderlich, z. B. um eine softwaregestütztes Codeerkennungsverfahren auf Basis der korrigierten Bilder ausführen zu können.

Das erfindungsgemäße Verfahren kann mit einfachen frei programmierbaren Logikbausteinen, sog. Field Programmable Gate Arrays (FPGA), und/oder anwendungsspezifischen Schaltkreisen, sog. Application Specific Integrated Circuits (ASIC) umgesetzt werden. Dies ermöglicht eine im Vergleich zu den aufwändigeren herkömmlichen Verfahren deutlich kostengünstigere Ausgestaltung einer Korrekturelektronik.

Gemäß einer bevorzugten Ausführungsform wird die Intensitätsanpassung nur in bestimmten Bereichen des Rohbildes durchgeführt. Insbesondere die Randbereiche des Rohbildes, die meistens einen Helligkeitsabfall aufweisen, sind dabei von besonderer Bedeutung. Durch die Verkleinerung des zu korrigierenden Bereichs kann die Zahl der verwendeten Korrekturwerte und/oder die Zahl der durchzuführenden Rechenoperationen weiter vermindert und das Verfahren so vorteilhaft vereinfacht und damit beschleunigt werden.

Nach einer vorteilhaften Weiterbildung der Erfindung ist jedem Bildpunkt genau ein Intensitätswert zugeordnet, der in diesem Fall einen Grauwert darstellt. In einer alternativen Ausführungsform sind jedem Bildpunkt mehrere Intensitätswerte zugeordnet. Diese Intensitätswerte entsprechen der Intensität des jeweiligen Farbkanals der Sensormatrix. Zumeist handelt es sich dabei um drei Farbkanäle. Je nach den Bedingungen der Einsatzumgebung, der Eigenschaften der beobachteten Flächen und/oder der Komplexität der Aufgabe können somit Monochrom- oder auch Farbkameras verwendet werden.

Die Intensitätsanpassung kann für einen oder auch mehrere Farbkanäle durchgeführt werden. Es ist auch vorgesehen, alle Farbkanäle bei der Intensitätsanpassung zu berücksichtigen, wodurch die Bilddaten aller Kanäle vorteilhaft korrigiert werden und damit beispielsweise zu einer Codeerkennung herangezogen werden können.

Eine Intensitätskorrektur wird durch eine Multiplikation oder eine Summenbildung zwischen einem Intensitätswert und einem Korrekturwert realisiert. Da die erfindungsgemäße Intensitätsanpassung aus zwei voneinander unabhängigen Intensitätskorrekturen besteht, wird das Produkt oder die Summe aus dem jeweiligen Intensitätswert, einem von der Zeilenkoordinate abhängigen Korrekturwert f(x) und einem von der Spaltenkoordinate abhängigen Korrekturwert g(y) gebildet. Dies lässt sich auch beispielsweise in den Formen o(x,y) = i(x,y) * f(x) * g(y) oder o(x,y) = i(x,y) + f(x) + g(y) darstellen, wobei i(x,y) die intensitätswerte der Bildpunkte des Rohbilds und o(x,y) die Intensitätswert der Bildpunkte nach der Intensitätsanpassung sind. Es versteht sich, dass die Korrekturwerte f(x), g(y) auch negativ sein können.
Setzt man f(x) = 1 für alle x oder g(y) = 1 für alle y, so ist das Verfahren auch auf Zeilensensoren (Zeilenkameras) anwendbar.

Derartige lineare, auf Additionen oder Multiplikationen basierende Korrekturen greifen auf relativ wenige und einfache Rechenoperationen zurück und sind daher im Vergleich zu nichtlinearen Korrekturen mit weniger Rechenaufwand durchführbar.

Gemäß einer bevorzugten Ausführungsform sind die Korrekturwerte f(x), g(y) nicht nur von der Zeilen- und Spaltenkoordinate abhängig sondern auch von dem Farbkanal, auf dessen Intensitätswert sie angewandt werden. So kann z.B. auf einen roten Farbkanal eine andere Korrektur angewandt werden als auf einen grünen Farbkanal, um etwa den Effekt einer dominanten Farbe des Umgebungslichts auszugleichen oder auch Abbildungsfehlern der Empfangsoptik, die von der Wellenlänge des Lichts abhängen (chromatische Aberration), entgegenzuwirken.

Vorteilhafterweise sind die Korrekturwerte auch von der geometrischen Anordnung der Kamera gegenüber einer Beobachtungsfläche abhängig. Allein schon durch diese geometrischen Effekte wird die Intensitätsverteilung in einem Rohbild stark beeinflusst. Durch die Berücksichtigung des Aufnahmewinkels eines Rohbildes, also des Winkels zwischen der optischen Achse des Sensors und/oder der Empfangsoptik im Allgemeinen und der betrachteten Oberfläche, ergeben sich andere Korrekturwerte f(x), g(y) der Korrekturfunktionen f, g als bei einer senkrechten Aufnahmeposition. Eine alternative Ausführungsform berücksichtigt den Einfluss eines Beleuchtungswinkels auf die Intensitätsverteilung eines Rohbildes, d.h. die Korrekturwerte f(x), g(y) sind von dem Winkel zwischen dem beleuchtenden Licht und der beobachteten Fläche abhängig. Eine weitere Ausführungsform umfasst die beiden vorgenannten Ausführungsformen, d.h. die Korrekturwerte f(x), g(y) sind sowohl von dem Aufnahmewinkel des Rohbildes als auch von dem Beleuchtungswinkel des Rohbildes abhängig.

Durch die Berücksichtigung der Aufnahme- und Beleuchtungswinkeleffekte können Bilder korrigiert werden, die mit unterschiedlichsten Kamera- und Beleuchtungsanordnungen aufgenommen werden. Oftmals sind die geometrischen Voraussetzungen durch die baulichen Gegebenheiten der Einsatzumgebung vorgezeichnet. Ein Verfahren zur Intensitätskorrektur, die derartig nachteilige Aufnahme- und Beleuchtungswinkeleffekte ausgleicht, erweitert die Anwendungsmöglichkeiten eines gegebenen optoelektronischen Sensors erheblich.

Ferner kann es vorgesehen sein, die Korrekturwerte, die bei der Intensitätsanpassung verwendet werden, den Reflexionseigenschaften einer Beobachtungsfläche oder eines Beobachtungsgegenstandes anzupassen. Somit kann der Einfluss von beispielsweise matten, metallischen oder glänzenden Oberflächen bei der Intensitätsanpassung berücksichtigt werden. Auch die Effekte von Oberflächen mit Bereichen unterschiedlicher Reflexionseigenschaften können durch geeignete Korrekturwerte berücksichtigt werden.

Weiterhin ist es bevorzugt, wenn die verwendeten Korrekturwerte bereits werkseitig oder aber auch erst vor Ort, d.h. am Ort der bestimmungsgemäßen Anwendung des Geräts, welches das Verfahren umsetzt, bestimmt werden. Damit kann sichergestellt werden, dass die apparativen Charakteristika durch individuell angepasste Korrekturwerte möglichst gut ausgeglichen werden. Die Bestimmung der Korrekturwerte kann durch Lernprozesse erfolgen. Ein Lernprozess zur neuerlichen Bestimmung der Korrekturwerte kann vonnöten sein, wenn einzelne Elemente einer optoelektronischen Sensoranordnung, die das erfindungsgemäße Verfahren anwendet, ausgetauscht werden oder deren geometrische Anordnung verändert wird.

Es ist von Vorteil, wenn zusätzlich zu den Intensitätskorrekturen konstante Offsetwerte zu den Intensitätswerten der Bildpunkte addiert werden. Dies kann vor und/nach den einzelnen Intensitätskorrekturen erfolgen. Durch diese von der Position des Bildpunkts unabhängigen Anpassungen können beispielsweise zu helle bzw. zu dunkle Bilder einheitlich abgedunkelt bzw. aufgehellt werden, um später folgende Bildverarbeitungsprozesse vorzubereiten. Auch können so bestimmte Farbkanäle pauschal abgeschwächt und/oder verstärkt werden.

Gemäß einer vorteilhaften Weiterbildung werden diese konstanten Offsetwerte, die auch negativ sein können, anhand eines oder mehrerer Lernprozesse bestimmt. Dadurch ergeben sich weitere Möglichkeiten die spezifischen baulichen Eigenschaften einer Sensoranordnung oder Einflüsse der Umgebungsbedingungen zu kompensieren.

Die durch die erfindungsgemäße Intensitätsanpassung korrigierten Intensitäten o(x,y) der Bildpunkte eines Rohbilds werden mit referenzkorrigierten Intensitäten r(x,y) der Bildpunkte des gleichen Rohbilds verglichen, die zuvor mit einer optimierten, kompletten Referenzkorrekturmatrix, bei der jeder Korrekturwert von einer Zeilen- und einer Spaltenkoordinate abhängig ist, korrigiert wurden. Dieser Vergleich ergibt einen Korrekturfehler in Abhängigkeit des Abweichungsgrads des erfindungsgemäß intensitätsangepassten Bildes von dem referenzkorrigierten Bild. Konkret kann im Vorfeld ein Referenzobjekt, beispielsweise eine weiße Fläche, aufgenommen werden und anhand des erhaltenen Rohbildes eine Referenzkorrekturmatrix bestimmt werden, deren Anwendung auf das erhaltene Rohbild wieder eine weiße Fläche ergibt. Die Werte der Referenzkorrekturmatrix werden folglich so gewählt, dass das damit korrigierte Rohbild der aufgenommenen weißen Fläche möglichst gleicht. Im Anschluss daran kann ein beliebiges anderes Bild aufgenommen werden, welches einerseits mit der kompletten Referenzkorrekturmatrix bearbeitet wird, andererseits mit den Intensitätskorrekturen f(x) und g(y) korrigiert wird. Aus dem Unterschied zwischen den beiden Bildern ergibt sich ein Korrekturfehler.

Beide Verfahren zum Bestimmen des Korrekturfehlers lassen sich einfach umsetzen. Anhand dieses Korrekturfehlers ist es möglich, die Qualität der durchgeführten Korrekturen zu bestimmen und gegebenenfalls eine Warnung auszugeben oder andere Maßnahmen zu ergreifen, insbesondere besser angepasste Korrekturwerte einzusetzen.

Es ist bevorzugt, dass die Korrekturwerte f(x), g(y) und/oder die Offsetwerte so angepasst sind, dass der Korrekturfehler minimal ist. Damit wird eine hohe Qualität der Korrektur sichergestellt.

Gemäß einer vorteilhaften Weiterbildung der Erfindung wird nach der Intensitätsanpassung der Korrekturfehler bestimmt. Anschließend werden die Korrekturwerte und/oder die Offsetwerte verändert, wobei es das Ziel ist, den Korrekturfehler zu minimieren. Ein iteratives Verfahren, d.h. die Durchführung einer Intensitätsanpassung mit anschließender Bestimmung des Korrekturfehlers und entsprechender Veränderung der Korrekturwerte solange bis eine vordefinierte Korrekturqualität erreicht ist, lässt sich einfach umsetzen und kann praktisch ohne Eingriff eines Bedienungspersonals entweder während einer Initialisierungsphase oder aber auch während des Praxiseinsatzes ablaufen.

Eine Alternative der Erfindung umfasst die parallele Durchführung mehrerer Intensitätsanpassungen mit unterschiedlichen Sätzen von Korrekturwerten (z. B. f1(x), g1(y); f2(x), g2(y); ... oder f1(x), g1(y); f1(x), g2(y); ...) an einem Rohbild. Für jedes dieser korrigierten Bilder wird schließlich ein Korrekturfehler bestimmt. Der dem geringsten Korrekturfehler zugeordnete Korrekturwertsatz wird als der der Referenzkorrektur am nächsten kommender und somit am besten geeigneter Korrekturwertsatz ausgewählt.

Die vorstehend beschriebenen Verfahren zur Auswahl eines Korrekturwertesatzes mit minimalem Korrekturfehler sind insbesondere für Lernprozesse von Bedeutung. Ist ein Korrekturwertsatz mit minimalem Korrekturfehler bestimmt worden, so ist der Lernprozess beendet und die ermittelten Korrektwertsätze können im weiteren Betrieb verwendet werden. Es kann, wie bereits erläutert, unter Umständen notwendig sein, derartige Lernprozesse (Teach-In) zu wiederholen.

Weiterhin ist es bevorzugt, wenn nach einer Intensitätsanpassung weitere Intensitätskorrekturen durchgeführt werden. Dies ist von besonderem Vorteil, wenn beispielsweise nur bestimmte Bereiche genauer korrigiert werden sollen. Andere Bereiche, die z. B. von geringerer Bedeutung oder bereits hinreichend gut korrigiert sind, können unter Umständen von einer weiteren Intensitätskorrektur ausgenommen sein.

Das erfindungsgemäße Verfahren ermöglicht also eine schnelle und zuverlässige Anpassung der Intensität von Bildpunkten, wodurch Helligkeitsartefakte durch bauliche oder geometrische Effekte weitgehend entfernt werden. Durch die Geschwindigkeit des Verfahrens und die inzwischen hohe Aufnahmegeschwindigkeit herkömmlicher Sensoren können auch von einem Beobachtungsobjekt, insbesondere einem Code, mehrere Auf nahmen hintereinander gemacht werden und sogleich, d. h. in Echtzeit, korrigiert werden. Für besonders sicherheitsrelevante Anwendungen, z. B. bei der Codeerkennung in der pharmazeutischen Industrie, kann daher anhand mehrerer Bilder des gleichen Objekts eine Codeerkennung durchgeführt werden. Zusätzlich können auch bewusst die Korrekturwerte leicht verändert werden, um somit eine verbreiterte Bilddatenbasis zur Identifizierung des Codes zu liefern. Dies lässt sich auch parallel durchführen, d.h. auf ein Rohbild werden mehrere verschiedene Korrekturwertsätze angewandt. Diese parallel erzeugten korrigierten Bilder werden wiederum zur Mustererkennung herangezogen.

In beiden Fällen kann es vorgesehen sein, einen Code erst als erkannt einzustufen, wenn dieser anhand mehrerer Bildern identifiziert wurde, die mit unterschiedlichen Korrekturwerten oder Korrekturwertsätzen bearbeitet wurden. Damit wird die Zuverlässigkeit eines Codeerkennungssytems weiter verbessert.

Die Erfindung betrifft weiterhin einen optoelektronischen Sensor, der eine Sensormatrix, eine Empfangsoptik und eine Korrekturvorrichtung zur Korrektur der Helligkeit eines durch die Sensormatrix erzeugten Rohbildes umfasst. Dabei ist die Korrekturvorrichtung daran angepasst, ein Verfahren gemäß einer der beschriebenen Ausführungsformen durchzuführen. Ein opto-elektronischer Sensor mit einer derartigen Korrekturvorrichtung liefert nahezu in Echtzeit qualitativ hochwertige Bilder, die Flat-Fieldkorrigiert sind, d.h. dass Intensitätsinhomogenitäten aufgrund von unerwünschten Artefakten ausgeglichen wurden.

Weitere vorteilhafte Ausführungsformen der Erfindung sind in den Unteransprüchen, der Beschreibung und den Zeichnungen angegeben.

Die Erfindung wird nachfolgend lediglich beispielhaft unter Bezugnahme auf die Zeichnungen erläutert.
- Fig. 1: zeigt schematisch einen opto-elektronischen Sensor, bei dem das erfindungsgemäße Verfahren eingesetzt werden kann.
- Fig. 2: zeigt das Abbild einer Fläche mit homogener Farbverteilung ohne Flat-Field-Korrektur.
- Fig. 3: zeigt ein Flussdiagramm einer Flat-Field-Korrektur.
- Fig. 4: zeigt einen möglichen Verlauf einer Korrekturfunktion f bzw. g in Abhängigkeit von der Position der Pixel.
- Fig. 5a: zeigt schematisch einen bezüglich der Beobachtungsfläche schräg stehenden opto-elektronischen Sensor.
- Fig. 5b: zeigt ein Beispiel für eine Korrekturfunktion g bei einem schräg stehenden opto-elektronischen Sensor (siehe Fig. 5a).
- Fig. 6: zeigt einen bezüglich der Beobachtungsoberfläche schräg stehenden opto-elektronischen Sensor mit externer Beleuchtung der Beobachtungsfläche.
- Fig. 7: zeigt ein Flussdiagramm einer Ausführungsform eines iterativen Lernprozesses zur Bestimmung der Korrekturwerte.
- Fig. 8: zeigt ein Flussdiagramm einer weiteren Ausführungsform eines iterativen Lernprozesses zur Bestimmung der Korrekturwerte.
- Fig. 9: zeigt ein Flussdiagramm einer Ausführungsform zur Bestimmung der Korrekturwerte in einem parallelen Verfahren.

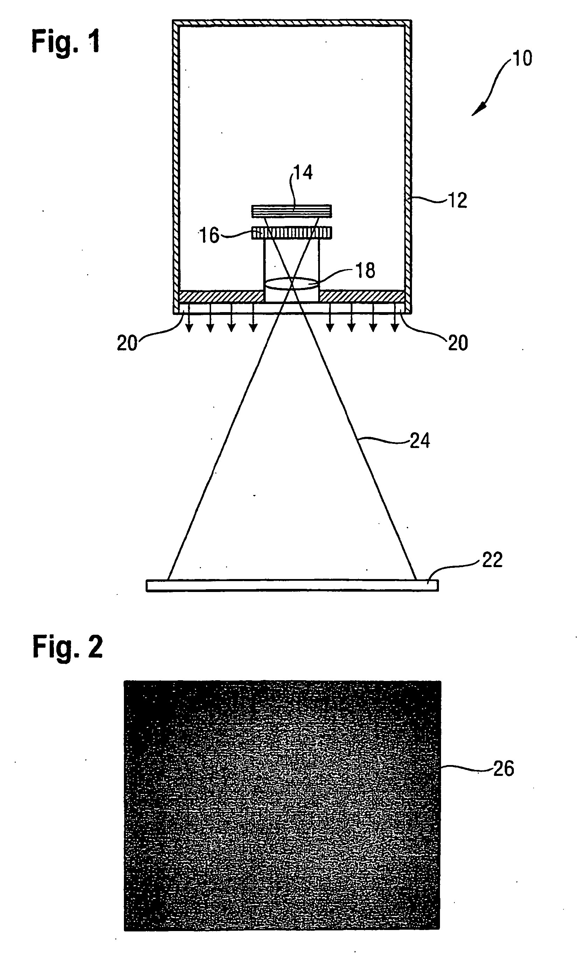

In Fig. 1 ist eine Kamera gezeigt, die ein Kameragehäuse 12, einen Matrixsensor 14, einen optischen Farbfilter 16 und ein Objektiv 18 umfasst. In dieser Ausführungsform der Kamera 10 ist die Lichtquelle 20 zur Beleuchtung eines Objekts 22 in die Kamera 10 integriert. Darüber hinaus ist der Empfangsstrahlengang 24 skizziert. Der Matrixsensor 14 liefert ein zweidimensionales Bild. Beispielsweise kann ein Bild in x-Richtung (hier z.B. senkrecht zur Darstellungsebene) 1280 und in y-Richtung (hier z.B. horizontal in der Darstellungsebene verlaufend) 1024 Bildpunkte (Pixel) umfassen.

In Fig. 2 ist ein durch den Matrixsensor 14 aufgenommenes Bild 26 gezeigt. Dieses Bild 26 ist die Aufnahme einer bezüglich ihrer Farbe und Reflexionseigenschaften homogenen, gleichmäßig ausgeleuchteten Fläche. Deutlich zu erkennen ist der Abfall der Helligkeit vor allem in den Randbereichen des Bilds 26. Die Helligkeitsinhomogenitäten sind störende Artefakte, die es zu korrigieren gilt. Wie eingangs schon geschildert, gehen derartige Effekte z.B. auf winkelabhängige Einflüsse des Objektivs 18, des optischen Farbfilters 16 und des Matrixsensors 14 zurück. Darüber hinaus können sie beispielsweise auch durch schräge oder inhomogene Beleuchtung verursacht werden.

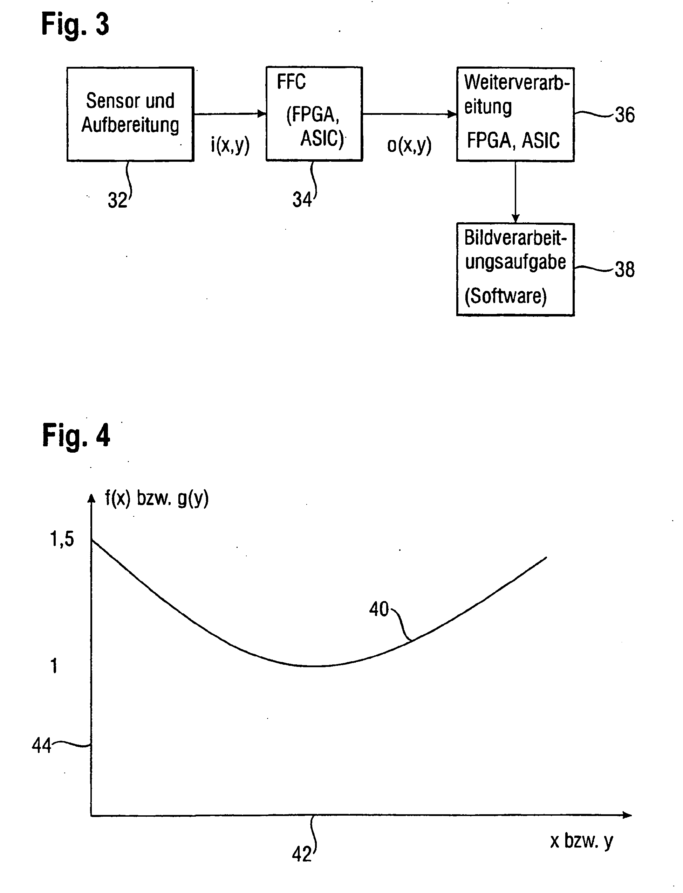

Der Ablauf einer Flat-Field-Korrektur ist in einem Flussdiagramm in Fig. 3 dargestellt. In Schritt 32 werden die Sensordaten aufbereitet. Die Werte i(x,y) des Rohbildes sind durch einen oder mehrere Intensitätswerte und die Ortskoordinaten x und y definiert. In Schritt 34 findet die Flat-Field-Korrektur (FFC) statt. Diese wird durch FPGA- (Field Programmable Gate Array) und/oder ASIC-Bauteile (Application Specific Integrated Circuit) durchgeführt. Das intensitätsangepasste Bild setzt sich nun aus Bildpunkten mit den Intensitätswerten o(x,y) zusammen. Im Anschluss daran erfolgt eine gegebenenfalls notwendige Weiterverarbeitung der Bilddaten. Die Bildverarbeitung, beispielsweise eine Mustererkennung, wird in Schritt 38 durchgeführt.

Fig. 4 zeigt beispielhaft eine Korrekturfunktion 40 wie sie in der erfindungsgemäßen Flat-Field-Korrektur im Schritt 34 (Fig. 3) angewandt werden kann. Die Korrekturfunktion 40 stellt die Korrekturwerte f(x) bzw. g(y) auf der Ordinate 44 in Abhängigkeit von ihrer Position in x- bzw. in y-Richtung (Abszisse 42) dar. Die dargestellte Korrekturfunktion 40 weist im Randbereich höhere Funktionswerte f(x) bzw. g(y) auf, um einen Helligkeitsabfall am Rand zu kompensieren. Andere Helligkeitsinhomogenitäten können durch entsprechende Korrekturfunktionen korrigiert werden.

In der Praxis ist dabei einem diskreten x-Wert ein diskreter Korrekturwert f(x) oder einem diskreten y-Wert ein diskreter Korrekturwert g(y) zugeordnet. Diese Werte können beispielsweise in Tabellen abgelegt sein. Das erfindungsgemäße Verfahren führt folglich mit zwei eindimensionalen Korrekturfunktionen eine effiziente Flat-Field-Korrektur durch. Zwar ist die erfindungsgemäße Korrektur nicht ganz so exakt wie herkömmliche Verfahren mit einer zweidimensionalen, kompletten Korrekturmatrix. Dieser geringe Nachteil wird allerdings durch die Schnelligkeit der erfindungsgemäßen Korrektur kompensiert. Bei den meisten Anwendungen ist es auch nicht nötig, eine vollständige, exakte Korrektur durchzuführen.

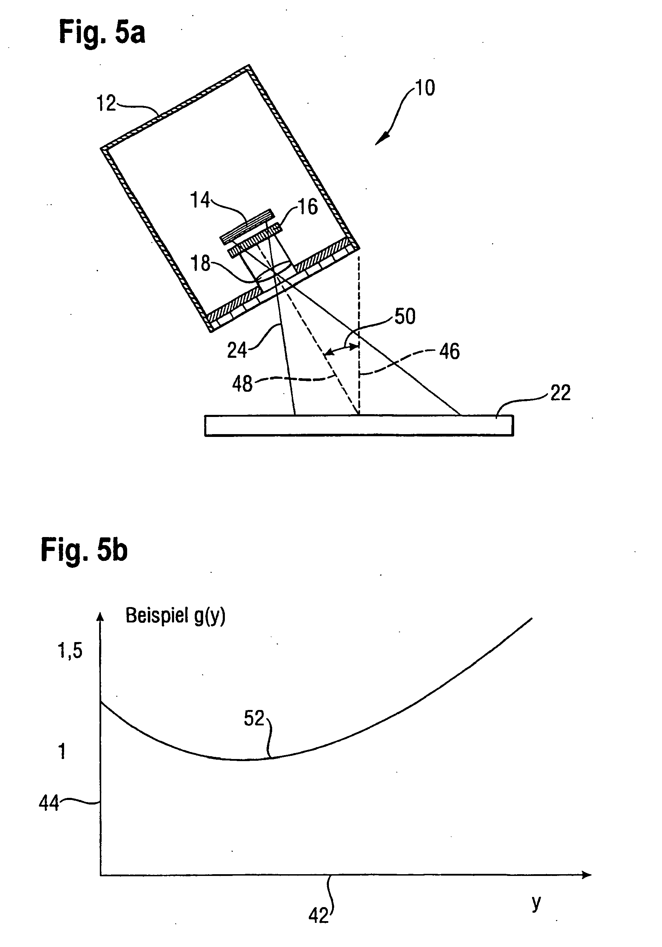

Fig. 5 illustriert die geometrischen Bedingungen bei einer schräg stehenden Kamera 10. Zwischen der Flächennormalen 46 des Objekts 22 und der optischen Achse 48 der Kamera 10 ist der Aufnahmewinkel 50 definiert. Dadurch entsteht ein anderer Helligkeitsabfall im Randbereich eines Rohbildes als bei einer senkrecht über dem Objekt 22 stehenden Kamera 10.

Den veränderten geometrischen Verhältnissen von Fig. 5a gegenüber der in Fig. 1 dargestellten Kamerastellung trägt die Aufnahmewinkelkorrekturfunktion 52 in Fig. 5b Rechnung. Dargestellt ist beispielhaft die Abhängigkeit der Korrekturwerte g(y) von den Positionswerten der Bildpunkte in y-Richtung. Im Vergleich zu der Korrekturfunktion 40 in Fig. 4 ist das Minimum der Aufnahmewinkelkorrekturfunktion 52 nach links verschoben. Durch die Aufnahmewinkelkorrekturfunktion 52 können die Helligkeitsinhomogenitäten, die durch das Schrägstehen der Kamera 10 verursacht werden, weitgehend beseitigt werden.

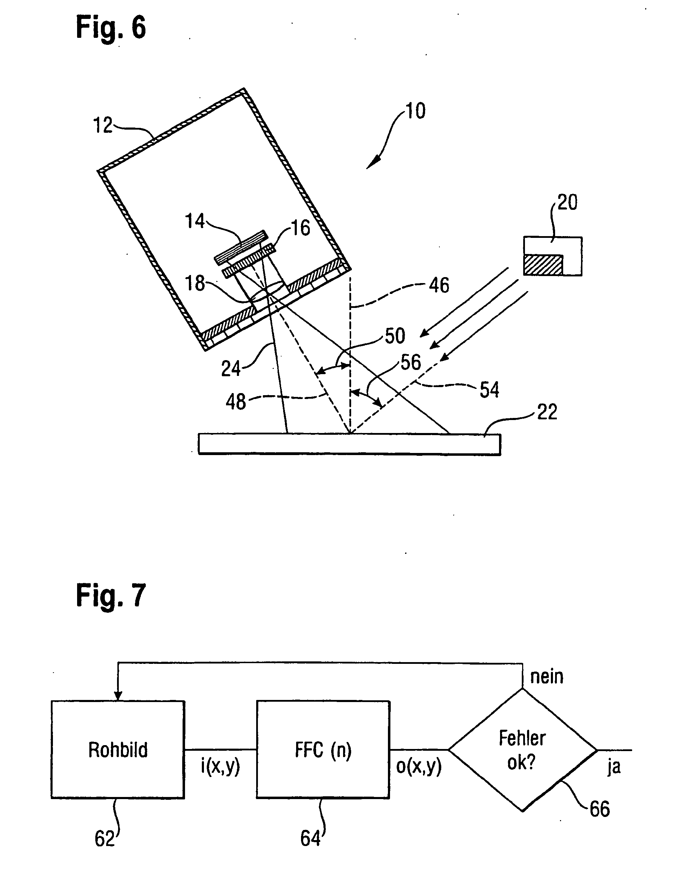

Fig. 6 zeigt eine weitere Variante der Aufnahme- bzw. Beleuchtungsverhältnisse. Im Gegensatz zu Fig. 1 ist in diesem Fall die Lichtquelle 20 nicht in das Kameragehäuse 12 integriert. Zwischen einer Beleuchtungsachse 54 und der Flächennormalen 46 auf die Oberfläche eines Objekts 22 ist ein Beleuchtungswinkel 56 definiert. Die Korrekturfunktionen f, g sind bei einer derartigen Anordnung der Kamera 10 und der Lichtquelle 20 unter anderem nicht nur von dem Aufnahmewinkel 50, sondern auch von dem Beleuchtungswinkel 56 abhängig.

Wie eingangs erläutert, können die Korrekturwerte entweder fest eingestellt werden oder in einem Lernprozess, sei es werksseitig oder vor Ort, bestimmt werden. In Fig. 7 ist eine Ausführungsform eines derartigen Lernprozesses in einem Flussdiagramm dargestellt. Ausgehend von einem Rohbild (Schritt 62) mit den Intensitätswerten i(x,y) wird in Schritt 64 eine Flat-Field-Korrektur (FFC) anhand eines Korrekturwertsatzes (angedeutet durch die Laufvariable n) durchgeführt. Das Ergebnis dieser Korrektur o(x,y) wird in Schritt 66 mit einem Referenzbild verglichen und ein Korrekturfehler KF bestimmt. Ist dieser Fehler minimal oder kleiner als ein vordefinierter Schwellenwert, so ist der Lernprozess abgeschlossen und der zuletzt verwendete Korrekturwertsatz (FFC(n)) wird für den normalen Betrieb verwendet. Anderenfalls beginnt das Verfahren von neuem bei Schritt 62, wobei nun in Schritt 64 ein anderer Korrekturwertsatz (FFC(n+1)) verwendet wird.

Zur Bestimmung des Korrekturfehlers können die in der Beschreibungseinleitung erläuterten Verfahren verwendet werden. Insbesondere kann zwischen dem nach Schritt 64 erhaltenen intensitätsangepassten Bild und einem Referenzbild bildpunktweise eine Intensitätsdifferenz gebildet werden. Beispielsweise kann die Summe der quadrierten Differenzen der Korrekturfehler sein.

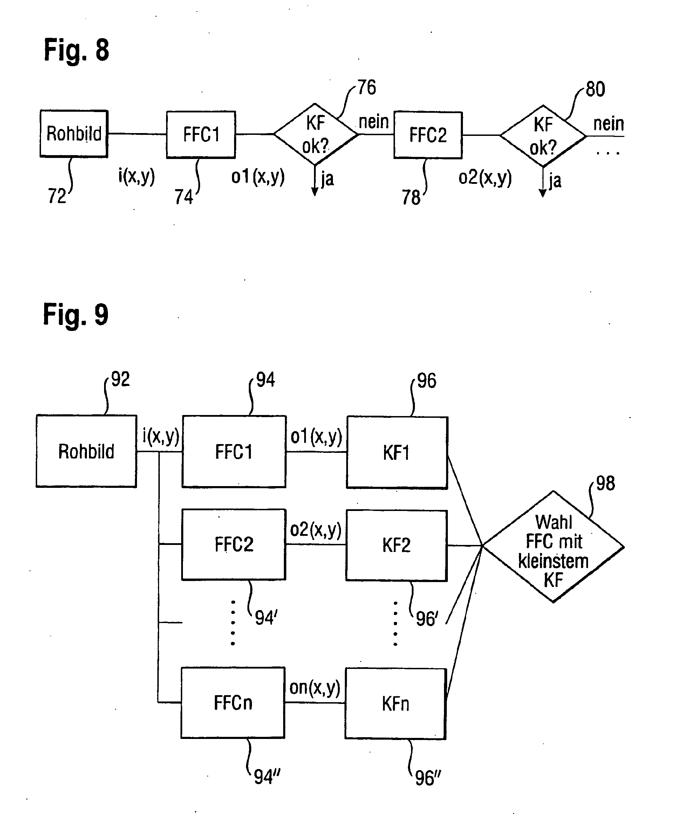

Fig. 8 zeigt ein Flussdiagramm einer alternativen Ausführungsform eines Lernprozesses zur Bestimmung geeigneter Korrekturwerte. Wiederum ausgehend von einem Rohbild (Schritt 72) wird in Schritt 74 eine Korrektur (FFC1) auf die Intensitätswerte i(x,y) der Bildpunkte eines Rohbildes angewandt. Ist der Korrekturfehler minimal oder kleiner als ein vordefinierter Schwellenwert, wird in Schritt 76 der Lernprozess abgeschlossen. Die Korrekturwerte des Korrekturwertsatzes FFC 1 würden in diesem Falle im Weiteren ihre Anwendung finden. Wird der Fehler als zu groß erachtet, wird nun nicht zu Schritt 72 zurückgekehrt, sondern in Schritt 78 eine weitere Korrektur (FFC2) auf die bereits korrigierten Intensitäten o1(x,y) der Bildpunkte angewandt, wodurch man einen neuen Bildpunktsatz mit den Intensitäten o2(x,y) erhält. In Schritt 80 wird wiederum der Korrekturfehler bestimmt.

Das Verfahren wird so lange fortgeführt, bis der Fehler minimal ist oder einen bestimmten Schwellwert unterschritten wird. Ein derartiges Vorgehen zur Bestimmung der geeigneten Korrekturwerte ist möglich, da die einzelnen Korrekturfunktionen im mathematischen Sinn lineare Abbildungen sind. Daher lässt sich aus den einzelnen Korrekturen FFC 1 bis FFCn eine geeignete Flat-Field-Korrektur FFC bestimmen.

Fig. 9 stellt ein weiteres Flussdiagramm zur Bestimmung geeigneter Korrekturwerte durch einen Lernprozess dar. Das in Schritt 92 gelieferte Rohbild, das aus Bildpunkten mit den Intensitäten i(x,y) besteht, wird parallel mehreren Flat-Field-Korrekturen mit unterschiedlichen Korrekturwertsätzen FFC1, FFC2, ... FFCn unterworfen (Schritte 94, 94', ..., 94"). Daraus ergeben sich mehrere Bildpunktsätze mit den Intensitäten o1(x,y), o2(x,y), ...on(x,y). Im Anschluss daran erfolgt in den Schritten 96,96', ..., 96" die Bestimmung der individuellen Korrekturfehler KF1, KF2, ... KFn. In Schritt 98 wird der Korrekturwertsatz für die weitere Verwendung ausgewählt, der den geringsten Korrekturfehler KF erzeugt.

### Bezugzeichenliste

- 10: Kamera
- 12: Kameragehäuse
- 14: Matrixsensor
- 16: optischer Farbfilter
- 18: Objektiv
- 20: Lichtquelle
- 22: Objekt
- 24: Empfangsstrahlengang
- 26: Bild
- 40: Korrekturfunktion
- 42: Abszisse
- 44: Ordinate
- 46: Flächennormale
- 48: optische Achse
- 50: Aufnahmewinkel
- 52: Aufnahmewinkelkorrekturfunktion
- 54: Beleuchtungsachse
- 56: Beleuchtungswinkel
- FFC: Flat-Field-Korrektur
- KF: Korrekturfehler

## Patentansprüche

1. Verfahren zur Korrektur der Helligkeit eines durch eine Sensormatrix erzeugten Rohbilds, bei dem an durch eine Zeilen- und eine Spaltenkoordinate und zumindest einen Intensitätswert definierten Bildpunkten eine Intensitätsanpassung durchgeführt wird, wobei auf die Intensitätswerte der zu korrigierenden Bildpunkte zwei voneinander unabhängige Intensitätskorrekturen zum einen in Abhängigkeit von der Zeilenkoordinate und zum anderen in Abhängigkeit von der Spaltenkoordinate der einzelnen Bildpunkte angewandt werden, und wobei bei der Intensitätsanpassung das Produkt oder die Summe aus dem jeweiligen Intensitätswert, einem von der Zeilenkoordinate abhängigen Korrekturwert und einem von der Spaltenkoordinate abhängigen Korrekturwert gebildet wird,
**dadurch gekennzeichnet,**
**dass** die Korrekturwerte derart gewählt werden, dass ein sich ergebender Korrekturfehler minimal ist, wobei der Korrekturfehler durch einen Vergleich von einem durch die Intensitätsanpassung veränderten ersten Bild mit einem mit einer optimierten Referenzkorrektur korrigierten zweiten Bild bestimmt wird, wobei beide Bilder von einem gemeinsamen Rohbild abgeleitet sind, oder dass mehrere Intensitätsanpassungen mit jeweils verschiedenen Korrekturwertsätzen, die zumindest teilweise unterschiedliche Korrekturwerte aufweisen, parallel angewandt werden und der Korrektwertsatz ausgewählt wird, bei dem der Korrekturfehler minimal ist, wobei ein Korrekturfehler durch einen Vergleich von den Korrekturwerten mit optimierten Referenzkorrekturwerten bestimmt wird.

2. Verfahren nach Anspruch 1,
**dadurch gekennzeichnet,**
**dass** die Intensitätsanpassung nur für bestimmte Bereiche, insbesondere für die Randbereiche des Rohbildes durchgeführt wird.

3. Verfahren nach Anspruch 1 oder 2,
**dadurch gekennzeichnet,**
**dass** jedem Bildpunkt genau ein Intensitätswert zugeordnet ist, welcher einen Grauwert repräsentiert, oder
**dass** jedem Bildpunkt zwei oder mehr Intensitätswerte zugeordnet sind, die jeweils einem Farbkanal der Sensormatrix entsprechen, wobei insbesondere eine Intensitätsanpassung für einen oder für mehrere, insbesondere für alle Farbkanäle erfolgt.

4. Verfahren nach einem der vorhergehenden Ansprüche,
**dadurch gekennzeichnet,**
**dass** die Korrekturwerte von dem Farbkanal, auf dessen Intensitätswerte sie angewandt werden, abhängig sind.

5. Verfahren nach einem der vorhergehenden Ansprüche,
**dadurch gekennzeichnet,**
**dass** die Korrekturwerte von einem Aufnahmewinkel des Rohbilds abhängig sind, wobei der Aufnahmewinkel bei der Erzeugung des Rohbilds der Winkel zwischen einer Flächennormalen der Sensormatrix oder der optischen Achse einer der Sensormatrix zugeordneten Optik und einer Flächennormalen einer Beobachtungsfläche ist, und/oder
**dass** die Korrekturwerte von einem Beleuchtungswinkel des Rohbilds abhängig sind, wobei der Beleuchtungswinkel bei der Erzeugung des Rohbilds der Winkel zwischen einer optischen Achse einer Beleuchtungseinheit zur Beleuchtung einer Beobachtungsfläche und einer Flächennormalen der Beobachtungsfläche ist, und/oder dass die Korrekturwerte von den Reflexionseigenschaften einer Beobachtungsfläche abhängig sind.

6. Verfahren nach einem der vorhergehenden Ansprüche,
**dadurch gekennzeichnet,**
**dass** die für die Intensitätskorrekturen verwendeten Korrekturwerte durch einen oder mehrere Lernprozesse bestimmt werden.

7. Verfahren nach einem der vorhergehenden Ansprüche,
**dadurch gekennzeichnet,**
**dass** bei der Intensitätsanpassung zusätzlich vor und/oder nach den Intensitätskorrekturen zu den Intensitätswerten der Bildpunkte ein oder mehrere unterschiedliche von den Zeilen- oder Spaltenkoordinaten unabhängige Offsetwerte addiert werden, wobei insbesondere die vor und/oder nach den Intensitätskorrekturen zu den Intensitätswerten der Bildpunkte addierten Offsetwerte durch einen oder mehrere Lernprozesse bestimmt werden.

8. Verfahren nach Anspruch 7,
**dadurch gekennzeichnet,**
**dass** die Offsetwerte derart gewählt werden, dass ein sich ergebender Korrekturfehler minimal ist.

9. Verfahren nach einem der vorhergehenden Ansprüche,
**dadurch gekennzeichnet,**
**dass** Intensitätsanpassung solange wiederholt wird und die Korrekturwerte dabei iterativ verändert werden, bis der Korrekturfehler minimal ist.

10. Verfahren nach einem der vorhergehenden Ansprüche,
**dadurch gekennzeichnet,**
**dass** nach der Intensitätsanpassung an zumindest einem Teil der Bildpunkte zumindest eine weitere Intensitätskorrektur durchgeführt wird.

11. Opto-elektronischer Sensor mit einer Sensormatrix, einer Empfangsoptik und einer Korrekturvorrichtung zur Korrektur der Helligkeit eines durch die Sensormatrix erzeugten Rohbilds, bei dem an durch eine Zeilen- und eine Spaltenkoordinate und zumindest einen Intensitätswert definierten Bildpunkten eine Intensitätsanpassung durchgeführt wird, wobei die Korrekturvorrichtung zur Anwendung von zumindest zwei voneinander unabhängigen Intensitätskorrekturen auf die Intensitätswerte der zu korrigierenden Bildpunkte geeignet ist, wobei die eine Intensitätskorrektur nur in Abhängigkeit von der Zeilenkoordinate und die andere Intensitätskorrektur nur in Abhängigkeit von der Spaltenkoordinate der einzelnen Bildpunkte durchführbar ist, und wobei bei der Intensitätsanpassung das Produkt oder die Summe aus dem jeweiligen Intensitätswert, einem von der Zeilenkoordinate abhängigen Korrekturwert und einem von der Spaltenkoordinate abhängigen Korrekturwert berechenbar ist,
**dadurch gekennzeichnet,**
**dass** durch die Korrekturvorrichtung die Korrekturwerte derart wählbar sind, dass ein sich ergebender Korrekturfehler minimal ist, wobei der Korrekturfehler durch einen Vergleich von einem durch die Intensitätsanpassung veränderten ersten Bild mit einem mit einer optimierten Referenzkorrektur korrigierten zweiten Bild bestimmbar ist, wobei beide Bilder von einem gemeinsamen Rohbild abgeleitet sind, oder dass durch die Korrekturvorrichtung mehrere Intensitätsanpassungen mit jeweils verschiedenen Korrekturwertsätzen, die zumindest teilweise unterschiedliche Korrekturwerte aufweisen, parallel anwendbar sind und der Korrekturwertsatz auswählbar ist, bei dem der Korrekturfehler minimal ist, wobei ein Korrekturfehler durch einen Vergleich der Korrekturwerte mit optimierten Referenzkorrekturwerten bestimmbar ist.

## Claims

1. A method of correcting the brightness of a raw image generated by a sensor matrix, wherein an intensity adaptation is carried out at picture elements defined by a row coordinate and by a column coordinate and by at least one intensity value, wherein two mutually independent intensity corrections are applied to the intensity values of the picture elements to be corrected, on the one hand in dependence on the row coordinate and on the other hand in dependence on the column coordinate of the individual picture elements, and wherein the product or the sum of the respective intensity value, of a correction value dependent on the row coordinate and of a correction value dependent on the column coordinate is formed in the intensity adaptation,
**characterised in that**
the correction values are selected such that a resulting correction error is minimal, with the correction error being determined by a comparison of a first image modified by the intensity adaptation with a second image corrected by an optimised reference correction, with both images being derived from a common raw image; or **in that** a plurality of intensity adaptations are applied in parallel with respective different correction value sets which at least partly have different correction values and the correction value set is selected in which the correction error is minimal, with a correction error being determined by a comparison of the correction values with optimised reference correction values.

2. A method in accordance with claim 1,
**characterised in that**
the intensity adaptation is only carried out for specific regions, in particular for the marginal regions of the raw image.

3. A method in accordance with claim 1 or claim 2,
**characterised in that**
precisely one intensity value is associated with each picture element and represents a grey value; or
**in that** two or more intensity values are associated with each picture element and each correspond to a colour channel of the sensor matrix,
with in particular an intensity adaptation taking place for one or more colour channels, in particular for all colour channels.

4. A method in accordance with any one of the preceding claims,
**characterised in that**
the correction values are dependent on the colour channel to whose intensity values they are applied.

5. A method in accordance with any one of the preceding claims,
**characterised in that**
the correction values are dependent on a taking angle of the raw image, with the taking angle on the production of the raw image being the angle between a surface normal of the sensor matrix or the optical axis of an optical system associated with the sensor matrix and a surface normal of an observation surface; and/or in that the correction values are dependent on a lighting angle of the raw image, with the lighting angle on the production of the raw image being the angle between an optical axis of a lighting unit for the illumination of an observation surface and a surface normal of the observation surface; and/or
**in that** the correction values are dependent on the reflection properties of an observation surface.

6. A method in accordance with any one of the preceding claims,
**characterised in that**
the correction values used for the intensity corrections are determined by one or more teaching processes.

7. A method in accordance with any one of the preceding claims,
**characterised in that**
one or more different offset values independent of the line coordinates or column coordinates are added to the intensity values of the picture elements additionally before and/or after the intensity corrections in the intensity matching, with in particular the offset values added to the intensity values of the picture elements before and/or after the intensity corrections being determined by one or more teaching processes.

8. A method in accordance with claim 7,
**characterised in that**
the offset values are selected such that a resulting correction error is minimal.

9. A method in accordance with any one of the preceding claims,
**characterised in that**
intensity matching is repeated for so long and the correction values are changed iteratively in this process until the correction error is minimal.

10. A method in accordance with any one of the preceding claims,
**characterised in that**
at least one further intensity correction is carried out at at least some of the picture elements after the intensity matching.

11. An optoelectronic sensor having a sensor matrix, an optical receiving system and a correction device for the correction of the brightness of a raw image generated by the sensor matrix in which an intensity matching is carried out at picture elements defined by a row coordinate and by a column coordinate and by at least one intensity value, wherein the correction apparatus is suitable for the application of at least two mutually independent intensity corrections to the intensity values of the picture elements to be corrected; wherein the one intensity correction can only be carried out in dependence on the row coordinate and the other intensity correction can only be carried out in dependence on the column coordinate of the individual picture elements; and wherein in the intensity adaptation, the product or the sum can be calculated from the respective intensity value, from a correction value dependent on the row coordinate and from a correction value dependent on the column coordinate,
**characterised in that**
the correction values can be selected by the correction apparatus such that a resulting correction error is minimal, wherein a correction error can be determined by a comparison of a first image changed by the intensity matching with a second image corrected by an optimised reference correction, with both images being derived from a common raw image; or **in that** a plurality of intensity adaptations can be applied in parallel, each having different correction value sets which at least partly have different correction values, and the correction value set can be selected in which the correction error is minimal, with a correction error being able to be determined by a comparison of the correction values with optimised reference correction values.

## Revendications

1. Procédé pour la correction de la luminosité d'une image brute produite par une matrice sensorielle, dans lequel on exécute une adaptation d'intensité à des points d'image définis par une coordonnée de ligne et une coordonnée de colonne et par au moins une valeur d'intensité, de sorte que l'on applique aux valeurs d'intensité des points d'image à corriger deux corrections d'intensité indépendantes l'une de l'autre d'une part en fonction de la coordonnée de ligne et d'autre part en fonction de la coordonnée de colonne des points d'image individuels, et lors de l'adaptation d'intensité, on forme le produit ou la somme de la valeur d'intensité respective, d'une valeur de correction dépendant de la coordonnée de ligne et d'une valeur de correction dépendant de la coordonnée de colonne,
**caractérisé en ce que**
les valeurs de correction sont choisies de telle façon qu'une erreur de correction résultante est minimum, l'erreur de correction étant déterminée par une comparaison d'une première image modifiée par l'adaptation d'intensité avec une seconde image corrigée avec une correction de référence optimisée, les deux images étant dérivées d'une image brute commune, ou
**en ce que** l'on applique parallèlement plusieurs adaptations d'intensité avec respectivement des jeux de valeurs de correction différents, qui présentent des valeurs de correction au moins partiellement différentes, et l'on choisit le jeu de valeurs de correction pour lequel l'erreur de correction est minimale, une erreur de correction étant déterminée par une comparaison des valeurs de correction avec des valeurs de correction de référence optimisées.

2. Procédé selon la revendication 1,
**caractérisé en ce que** l'adaptation d'intensité est exécutée uniquement pour certaines régions, en particulier pour les régions de bordure de l'image brute.

3. Procédé selon la revendication 1 ou 2,
**caractérisé en ce que** l'on associe à chaque point d'image exactement une valeur d'intensité qui représente une valeur de gris, ou **en ce que** l'on associe à chaque point d'image deux ou plusieurs valeurs d'intensité qui correspondent respectivement à un canal de couleur de la matrice sensorielle, et on procède en particulier à une adaptation d'intensité pour un ou pour plusieurs, et en particulier pour tous les canaux de couleur.

4. Procédé selon l'une des revendications précédentes,
**caractérisé en ce que** les valeurs de correction dépendent du canal de couleur aux valeurs d'intensité duquel elles sont appliquées.

5. Procédé selon l'une des revendications précédentes,
**caractérisé en ce que** les valeurs de correction dépendent d'un angle de prise de vue de l'image brute, l'angle de prise de vue lors de la génération de l'image brute étant l'angle entre une normale à la surface de la matrice sensorielle ou l'axe optique d'un dispositif optique associé à la matrice sensorielle et une normale à une surface d'observation,
et/ou
**en ce que** les valeurs de correction dépendent d'un angle d'éclairage de l'image brute, ledit angle d'éclairage lors de la génération de l'image brute étant l'angle entre un axe optique d'une unité d'éclairage pour éclairer une surface d'observation et une normale à la surface d'observation, et/ou
**en ce que** les valeurs de correction dépendent des propriétés de réflexion d'une surface d'observation.

6. Procédé selon l'une des revendications précédentes,
**caractérisé en ce que** les valeurs de correction utilisées pour les corrections d'intensité sont déterminées par un ou plusieurs processus d'apprentissage.

7. Procédé selon l'une des revendications précédentes,
**caractérisé en ce que**, lors de l'adaptation d'intensité, en supplément avant et/ou après les corrections d'intensité on ajoute aux valeurs d'intensité des points d'images une ou plusieurs valeurs offset différentes indépendantes des coordonnées de ligne ou des coordonnées de colonne, et en particulier les valeurs offset ajoutées avant et/ou après les corrections d'intensité aux valeurs d'intensité des points d'image sont déterminées par un ou plusieurs processus d'apprentissage.

8. Procédé selon la revendication 7,
**caractérisé en ce que** les valeurs offset sont choisies de telle façon qu'une erreur de correction résultante est minimum.

9. Procédé selon l'une des revendications précédentes,
**caractérisé en ce que** l'adaptation d'intensité est répétée aussi longtemps, et les valeurs de correction sont modifiées ici de façon itérative, jusqu'à ce que l'erreur de correction soit minimale.

10. Procédé selon l'une des revendications précédentes,
**caractérisé en ce qu'**après l'adaptation d'intensité, on exécute au moins une autre correction d'intensité à au moins une partie des points d'image.

11. Capteur optoélectronique avec une matrice sensorielle, une optique de réception et un dispositif de correction pour la correction de la luminosité d'une image brute engendrée par la matrice sensorielle, dans lequel on exécute une adaptation d'intensité à des points d'images définis par une coordonnée de ligne et une coordonnée de colonne et par au moins une valeur d'intensité, le dispositif de correction convenant à l'application d'au moins deux corrections d'intensité indépendantes l'une de l'autre aux valeurs d'intensité des points d'images à corriger, une correction d'intensité étant exécutée uniquement en fonction des coordonnées de ligne et l'autre correction d'intensité étant exécutée uniquement en fonction des coordonnées de colonne des points d'image individuels, et lors de l'adaptation d'intensité, on calcule le produit ou la somme de la valeur d'intensité respective, d'une valeur de correction dépendant de la coordonnée de ligne, et d'une valeur de correction dépendant de la coordonnée de colonne,
**caractérisé en ce que**
les valeurs de correction peuvent être choisies par le dispositif de correction de telle façon qu'une erreur de correction résultante est minimum, ladite erreur de correction étant déterminée par une comparaison d'une première image modifiée par l'adaptation d'intensité avec une seconde image corrigée avec une correction de référence optimisée, les deux images étant dérivées d'une image brute commune, ou **en ce que**
au moyen du dispositif de correction, plusieurs adaptations d'intensité peuvent être appliquées parallèlement avec des jeux de valeurs de corrections respectives différents, qui présentent des valeurs de correction au moins partiellement différentes, et il est possible de choisir le jeu de valeurs de correction pour lequel l'erreur de correction est minimum, une erreur de correction étant déterminée par une comparaison des valeurs de correction avec des valeurs de correction de référence optimisées.
